# EUROPEAN PATENT SPECIFICATION

(11) **EP 2 470 841 B1**
(45) Date of publication and mention of the grant of the patent: **18.06.2014**
(21) Application number: 10819450.7
(22) Date of filing: 23.09.2010
(51) Int. Cl.: F25B 1/00, F25B 39/04, F28D 7/10, F28F 13/00

(54) **LIQUID-COOLED HEAT EXCHANGER IN A VAPOR COMPRESSION REFRIGERATION SYSTEM**
FLÜSSIGKEITSGEKÜHLTER WÄRMETAUSCHER IN EINEM DAMPFKOMPRESSIONS-KÜHLSYSTEM
ECHANGEUR THERMIQUE REFROIDI PAR LIQUIDE DANS UN SYSTÈME DE RÉFRIGÉRATION À COMPRESSION DE VAPEUR

(30) Priority: 28.09.2009 US 246239 P
(43) Date of publication of application: 04.07.2012
(73) Proprietor: Carrier Corporation, Farmington, CT 06034 (US)
(72) Inventor: HUFF, Hans-Joachim, Mainz 55118 (DE); ASPROVSKI, Zvonko, Liverpool New York 13090 (US)
(74) Representative: Taylor, Adam David
(86) International application number: PCT/US2010/049976
(87) International publication number: WO 2011/038105

(56) References cited:
- JP-A- 58 031 241
- JP-A- 2007 107 828
- JP-A- 2008 275 214
- KR-A- 20020 029 597

## Description

### Field of the Disclosure

This disclosure relates generally to vapor compression refrigeration systems and, more particularly, to a method and apparatus for liquid cooling a refrigerant in a vapor compression refrigeration system. An exemplary prior art refrigeration system is disclosed in JP 2008-275214. A heat exchanger having the features in the preamble of claim 1 is known from JP-A-2007 107828.

### Background of the Disclosure

A transport refrigeration system used to control enclosed areas, such as the insulated box used on trucks, trailers, containers, or similar intermodal units, functions by absorbing heat from the enclosed area and releasing heat outside of the box into the environment. The transport refrigeration system commonly includes a compressor to pressurize refrigerant vapor, and an air-cooled condenser to decrease the temperature of the pressurized vapor exiting the compressor, thereby changing the state of the refrigerant from a vapor to a liquid. Ambient air is blown across the refrigerant coils in the condenser to effect the heat exchange. The system further includes an evaporator for drawing heat out of the box by drawing or pushing return air across refrigerant-containing coils within the evaporator. Any remaining liquid refrigerant flowing through the coils within the evaporator is vaporized, then drawn back into the compressor to complete the circuit.

Some transport refrigeration systems require operation in adverse conditions, such as in tropical climates or on container ships at sea. One problem that may occur under these conditions is that the ambient air blown across the refrigerant coils in the condenser may be at a relatively high temperature, thereby reducing the effectiveness of the heat exchange within the condenser. In some cases, for example in the cargo hold of a container ship, the ambient air may not be available at all. Insufficient heat exchange within the refrigeration system results in insufficient cooling in the cargo container, which may in turn lead to spoiling of the contents in the cargo container.

### Summary of the Disclosure

Viewed from a first aspect, the present invention provides a liquid-cooled heat exchanger for use in a refrigerant vapor compression system, the liquid-cooled heat exchanger comprising: an enclosure comprising a first interior surface defining a first interior volume, the enclosure further comprising a plurality of openings being fluidly coupled to the first interior volume, the plurality of openings comprising a first refrigerant tube opening, a second refrigerant tube opening, a first coolant port adapted to flow a liquid coolant into the enclosure, and a second coolant port adapted to flow the coolant out of the enclosure; a first fitting sealingly engaged to the first coolant port, the fitting adapted to couple with a coolant inlet conduit; a second fitting sealingly engaged to the second coolant port, the fitting adapted to couple with a coolant discharge conduit; and a continuous refrigerant tube having a first end, a second end, and a first length disposed therebetween, the first end passing through and in sealing engagement with the first refrigerant tube opening, the second end passing through and in sealing engagement with the second refrigerant tube opening, the first length disposed in serpentine fashion within the first interior volume, characterised by a baffle disposed within the enclosure, the baffle defining a second interior volume within the first interior volume, the baffle having at least one aperture fluidly coupling the second interior volume to a remaining portion of the first interior volume, wherein the continuous refrigerant tube further comprises a second length disposed within the second interior volume.

Viewed from a second aspect, the present invention provides a method for liquid-cooling of a vapor refrigerant in a refrigerant vapor compression system, the method comprising the steps of: providing an air-cooled heat exchanger; providing a liquid-cooled heat exchanger coupled to the air-cooled heat exchanger, the liquid-cooled heat exchanger comprising an enclosure having a first interior volume; providing in serpentine fashion a continuous refrigerant tube extending through the first volume of the liquid-cooled heat exchanger; flowing a refrigerant through the air-cooled heat exchanger and, if the refrigerant is not sufficiently cooled, simultaneously flowing the refrigerant through the continuous refrigerant tube in the liquid-cooled heat exchanger and flowing a liquid coolant through the first interior volume of the liquid-cooled heat exchanger, characterised by the step of providing a baffle within the first interior volume, the baffle defining a second interior volume within the first interior volume, the baffle comprising an aperture, the continuous refrigerant tube extending through the first volume of the liquid-cooled heat exchanger, through the aperture, and through the second interior volume of the liquid-cooled heat exchanger.

### Brief Description of the Drawings

For a further understanding of the disclosure, reference will be made to the following detailed description of the disclosure which is to be read in connection with the accompanying drawing, wherein:
FIG. 1 is a schematic view of a refrigeration system including a liquid-cooled heat exchanger in accordance with the present disclosure; and
FIG. 2 is a side plan view of an embodiment of the liquid-cooled heat exchanger of FIG. 1, in cross section.

### Detailed Description of the Disclosure

One approach that has been employed to address the problem of insufficient heat exchange within the refrigeration system is to augment the typical air-cooled condenser with an inline liquid-cooled heat exchanger downstream of the air-cooled condenser. In one example transportation refrigeration system, refrigerant vapor flows through the heat exchanger and impinges on coolant tubes disposed therein. The coolant tubes flow a liquid coolant, which is often water. The warm refrigerant vapor condenses as it contacts the cold coolant tubes. In order to assure as much vapor as possible impinges on the tubes, the tubes are designed to maximize surface area, typically by utilizing small diameter tubes or coiling the tubes within the heat exchanger, or both. The condensed refrigerant is carried by gravity to a collection point in the bottom of the shell. A drain port located proximate to the collection point allows the condensed liquid refrigerant to accumulate and be piped to the next component in the system.

One problem noted with this approach is that the liquid-cooled heat exchanger has to be constructed of high strength materials because the heat exchanger enclosure is a pressure vessel. The coolant tubes disposed in the enclosure occupy a large volume so as to maximize contact with the refrigerant vapor. The vapor pressure of the refrigerant flowing within the heat exchanger enclosure could be 74 bars or more (1,000 pounds per square inch). Thus, the large surface area at a high pressure requires a thick-walled pressure vessel, high strength materials, or both. High strength materials result in a condenser that is expensive to manufacture.

Another problem noted with such an arrangement is that the temperature of the refrigerant vapor entering the enclosure is high, approximately 140 °C. Accordingly, the enclosure must be designed to withstand the elevated temperatures without sacrificing strength.

Another, separate problem encountered with current refrigeration systems is that the environmental impact of common refrigerants has come under great scrutiny. Until recently, common refrigerants used in refrigeration systems included chlorofluorocarbons (CFCs) such as trichlorofluoromethane (R-11) and dichlorodifluoromethane (R-12). However, these refrigerants are being phased out due to their harmful effects to the ozone layer. Hydrochlorofluorocarbon (HCFC) refrigerants such as chlorodifluoromethane (R-22) have taken their place because they are energy-efficient, low-in-toxicity, cost effective and can be used safely. However, HCFCs still contribute to ozone depletion, although at a much smaller rate. A recent trend has been to replace HCFCs with hydrofluorocarbons (HFCs) such as tetrafluoroethane (R-134a), which contain no chlorine and have no known effects on the ozone layer. However, there is increasing concern that HFCs contribute to greenhouse gases which, although not ozone-depleting, may cause global warming. Most recently, carbon dioxide (R-744) has re-gained favor as a commercial refrigerant because of its high volumetric cooling capacity and absence of harmful environmental effects.

Design requirements for carbon dioxide refrigerant systems are very different from other refrigerant systems such as R-134a. One major difference attributable to carbon dioxide as a refrigerant is that it undergoes a room temperature phase transition from gas to liquid at a pressure of approximately 6000 kilopascal (870 pounds per square inch). By comparison, R-134a undergoes a room temperature phase transition at approximately 700 kilopascal (100 pounds per square inch). Consequently, vapor compression refrigeration components designed to condense carbon dioxide to a liquid must be designed to withstand approximately eight times more pressure than systems utilizing R-134a, thereby exacerbating the problem of designing components as pressure vessels.

To compound the problem further, designers typically design the refrigerant system to operate in a transcritical cycle, often at pressures of 7,500-12,500 kilopascal (1100-1800 pounds per square inch). Designing a refrigeration system to safely operate at this higher pressure is problematic and expensive.

Another problem encountered in a carbon dioxide refrigerant system is that prior art liquid-cooled heat exchangers perform inadequately because the supercritical carbon dioxide vapor does not condense to a liquid. That is to say, the refrigerant enters the heat exchanger as a warm vapor, and exits the heat exchanger as a cool vapor, instead of a cool liquid. Therefore, the gravity-feed mechanism and the condensate collection means utilized in the prior art liquid-cooled heat exchangers are of little use.

The inventors have addressed these problems and limitations by designing a liquid-cooled heat exchanger that flows the refrigerant vapor through a single continuous tube, and simultaneously flows a cooling liquid around the tube. The condenser is particularly well adapted for use in a transport refrigeration system.

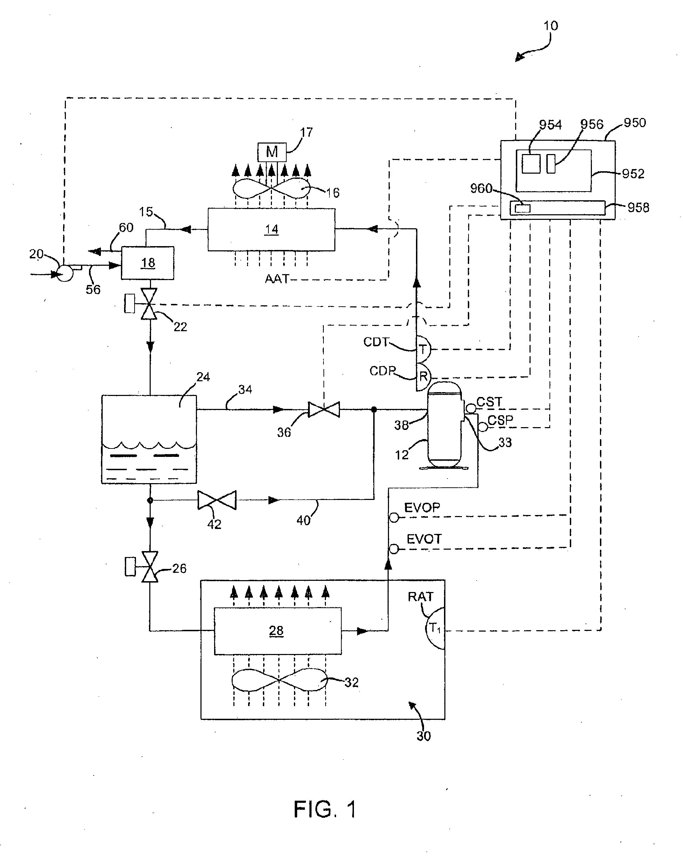

Referring to FIG. 1, there is shown schematically an exemplary embodiment of a refrigerant vapor compression system 10 according to the present disclosure. The system 10 includes a compressor 12, such as a reciprocating piston compressor, to compress refrigerant to a higher temperature and pressure. In the illustrated example, the refrigerant is carbon dioxide (CO₂). The system further includes a first heat exchanger 14 which passes the supercritical refrigerant in heat exchange relationship with a cooling medium, such as ambient air. In the illustrated example ambient air is driven by a fan 16. In many refrigeration systems, first heat exchanger 14 is a condenser adapted to condense at least some of the superheated refrigerant to a liquid. However, since the working fluid of the present embodiment is CO₂ operating in a transcritical cycle, it does not condense to a liquid. Rather, sensible heat is removed from the supercritical refrigerant and the now-cooler refrigerant gas exits the first heat exchanger 14 through conduit 15.

In some refrigeration systems, such as a transport refrigeration system on a ship at sea, ambient air may be limited or unavailable for the first heat exchanger 14. Or, prevailing ambient conditions may dictate that although ambient air is available, the temperature is too high to effect an adequate heat exchange with the refrigerant. Therefore, the system 10 further includes a second heat exchanger 18 in serial relationship with the first heat exchanger 14. The second heat exchanger 18 is adapted to cool the refrigerant to an adequate temperature in the event the first heat exchanger 14 is unable to do so. In the illustrated example, the second heat exchanger 18 is a liquid-cooled tube-in-shell heat exchanger, as will be discussed in detail below. A pump 20 is adapted to pump a liquid coolant 21 (not shown) through the second heat exchanger 18. The liquid coolant 21 discharged from the second heat exchanger 18 through conduit 60 may be re-circulated through an auxiliary heat exchanger (not shown) or dumped. In the illustrated example, the refrigerant vapor compression system 10 is adapted to utilize water as the liquid coolant 21. In one embodiment, a container ship transporting cargo, such as cargo stored in the refrigerant vapor compression system 10 disclosed herein, pumps water through a network of pipes for a variety of on-board functions. The water, sometimes referred to as "grey water," flows or circulates continuously through the network of pipes and may be tapped into to satisfy coolant requirements. The availability of the grey water makes it an ideal choice for the liquid coolant 21. In the illustrated example, the grey water discharged from the second heat exchanger 18 is fed back to the network of pipes.

In one example, the cooled refrigerant vapor flows from the second heat exchanger 18 through a first expansion device 22 and a flash tank receiver 24. As the CO₂ refrigerant leaves the second heat exchanger 18, it passes through the first expansion device 22 where it expands to a lower pressure and enters the flash tank receiver 24 as a mixture of liquid refrigerant and vapor. The flash tank receiver 24 operates as a charge control tank. The liquid refrigerant settles in the lower portion of the flash tank receiver 24 and the refrigerant vapor collects in the upper portion of the flash tank receiver 24.

The liquid refrigerant passes from the flash tank receiver 24 to a second expansion device 26 where it expands to a lower pressure and temperature before entering an evaporator 28. The evaporator 28 typically includes tubes or coils (not shown) through which the refrigerant flows in heat exchange relationship with a heat medium so as to vaporize the remaining liquid refrigerant. The heat medium is typically the return air from a refrigerated cargo box 30. The return air is preferably drawn or pushed across the tubes or coils by at least one evaporator fan 32. The low pressure refrigerant vapor leaves the evaporator 28 and then returns to the suction port 33 of the compressor 12.

The system 10 further includes a controller 950 to monitor and control many of the points in the refrigeration system 10. The controller 950 includes a microprocessor board 952 that contains a microprocessor 954 and its associated memory 956. The memory 956 of the controller 950 can contain operator or owner preselected, desired values for various operating parameters within the system 10 including, but not limited to, temperature set points for various locations within the system 10 or the cargo box 30, pressure limits, current limits, engine speed limits, and any variety of other desired operating parameters or limits with the system 10. In the illustrated example, the controller 950 includes an input/output (I/O) board 958, which contains an analog to digital converter 960 which receives temperature inputs and pressure inputs from various points in the system, AC current inputs, DC current inputs, voltage inputs and humidity level inputs. In addition, I/O board 958 includes drive circuits or field effect transistors ("FETs") and relays which receive signals or current from the controller 950 and in turn control various external or peripheral devices in the system 10, such as the pump 20, for example.

Among the specific components controlled by controller 950 are the first expansion device 22 and a motor 17 for the fan 16. Among the specific sensors and transducers monitored by controller 950 are the return air temperature (RAT) sensor which inputs into the microprocessor 954 a variable resistor value according to the evaporator return air temperature; the ambient air temperature (AAT) sensor which inputs into microprocessor 954 a variable resistor value according to the ambient air temperature read in front of the condenser 16; the compressor suction temperature (CST) sensor, which inputs to the microprocessor a variable resistor value according to the compressor suction temperature; the compressor discharge temperature (CDT) sensor, which inputs to microprocessor 954 a resistor value according to the compressor discharge temperature inside the dome of compressor 12; the evaporator outlet temperature (EVOT) sensor, which inputs to microprocessor 954 a variable resistor value according to the outlet temperature of evaporator 28; the compressor suction pressure (CSP) transducer, which inputs to microprocessor 954 a variable voltage according to the compressor suction value of compressor 12; the compressor discharge pressure (CDP) transducer, which inputs to microprocessor 954 a variable voltage according to the compressor discharge value of compressor 12; and the evaporator outlet pressure (EVOP) transducer which inputs to microprocessor 954 a variable voltage according to the evaporator outlet pressure of evaporator 28.

The system 10 optionally includes an economizer circuit. In the illustrated example, the flash tank receiver 24 operates not only as a charge control tank, but also as a flash tank economizer. Vapor refrigerant collecting in the upper portion of the flash tank receiver 24 above the liquid level passes from the receiver 24 along conduit 34 through solenoid valve 36 to a vapor injection port 38. The solenoid valve 36 is controlled by the controller 950 in order to turn on and off the economizer operation. Other economizer circuits are possible without departing from the scope of the invention. In another embodiment, a brazed plate heat exchanger (not shown) is included in the system instead of the flash tank.

In the event that the compressor 12 tends to operate at elevated temperatures, it is desirable to provide liquid injection into the vapor injection port 38 or an alternative port for liquid. Accordingly, conduit 40 and associated solenoid valve 42 are provided for that purpose.

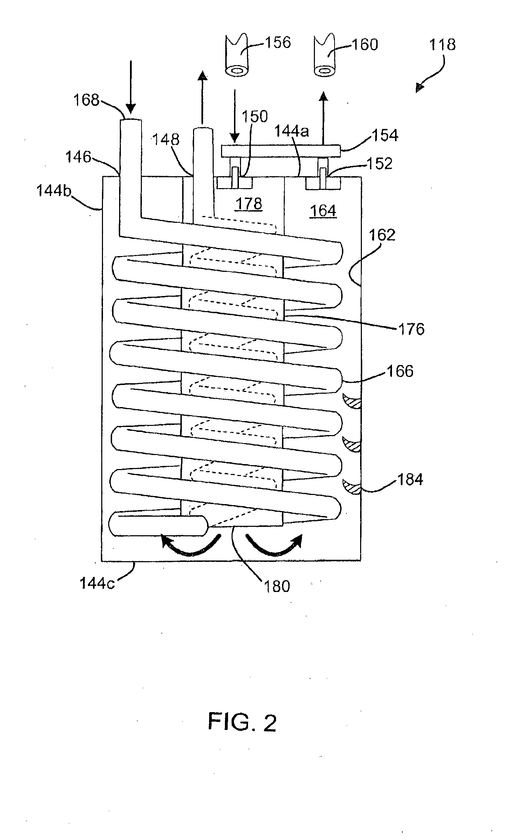

Turning now to FIG. 2 of the drawings, an embodiment of a second heat exchanger 118 includes a refrigerant tube 166 having multiple coils to increase the contact area with the liquid coolant. The second heat exchanger 118 includes a circular enclosure 144 having a top 144a, side 144b, and a bottom 144c. A first interior surface 162 of the enclosure 144 defines a first interior volume 164. The first interior surface 162 is circular to conform to the shape of the enclosure 144. In that regard, the enclosure 144 may be square (or rectangular), and the first interior surface 162 could include four sides. Other shapes for the enclosure 144 are possible. The top of the enclosure 144a may be designed as a removable cover with hinges, clasps or the like (not shown) so that the internal components may be removed for cleaning.

The second heat exchanger 118 further includes a baffle 176 disposed within the enclosure 144. The baffle 176 separates a second interior volume 178 from the remainder of the first interior volume 164. The baffle 176 includes at least one aperture 180 fluidly coupling the second interior volume 178 to the remaining portion of the first interior volume 164. The baffle 176 is constructed so as to secure against leakage or fluid passage from one volume to the other, thereby limiting any fluid communication between the two volumes solely to the aperture 180. In the illustrated example, the baffle 176 is cylindrical and concentrically disposed within the enclosure 144. The cylindrical baffle 176 sealingly abuts the top of the enclosure 144a, and is open at the opposing end, towards the bottom of the enclosure 144c. In this embodiment, the opening creates the aperture 180.

The second heat exchanger 118 further includes a first coolant port 150, which in the illustrated embodiment is the liquid coolant inlet port. The first coolant port 150 may be adapted with a fitting 154 to sealingly secure a coolant inlet conduit 156 to the top of the enclosure 144a. A second coolant port 152 provides a discharge means for the coolant exiting the second heat exchanger 118. A fitting, such as the fitting 154, secures to the top of the enclosure 144a and provides a mating connection for a coolant discharge conduit 160. In the disclosed example, the fitting 154 is illustrated as a common fitting for both the first coolant port 150 and the second coolant port 152. However, a separate fitting may be used. The coolant at the discharge may be liquid, vapor, or a mixture of both.

The aforementioned continuous coolant tube 166 is disposed within the enclosure 144 so as to increase the heat transfer between the surface of the refrigerant tube and the coolant flowing within the enclosure. In the embodiment shown, a first end 168 of the tube 166 passes through a first refrigerant tube opening 146 into the first interior volume 164. The first interior volume 164 is that volumetric portion that has not been supplanted by the volumetric portion of second interior volume 178. The tube 166 is coiled around the outer wall of the baffle 176 in a downward- spiraling manner. At the bottom of the enclosure 144c, the tube 166 is formed so as to produce a tighter or smaller diameter coil. The tube 166 then coils in an upwardly- spiraling manner within the second interior volume 178. At the top of the enclosure 144a, the tube 166 exits the enclosure 144 through a second refrigerant tube opening 148.

Other means of increasing the heat transfer between the refrigerant and the coolant are possible. For example, the velocity of the liquid coolant flow (e.g., grey water) through the enclosure 144 may be increased by the pump 20 (FIG. 1). Also, at least one flow turbulator 184 may be positioned within the coolant flow path. The flow turbulators increase turbulence of the liquid coolant to increase the heat transfer between the coolant and the refrigerant tube.

Referring now to FIGS. 1 and 2, in operation the second heat exchanger 18,118 may be activated when the first heat exchanger 14 does not remove sufficient heat from the refrigerant vapor. In one embodiment, the coolant inlet conduit 56,156 and the coolant discharge conduit 60,160 are coupled via quick connect couplings to the grey water network. The pump 20 continuously pumps cooling water through the grey water network, and a manual valve (not shown) may be opened or closed upon need to flow the coolant through the enclosure 144. In another embodiment, the pump 20 may be coupled to the second heat exchanger 18,118 and is isolated from the grey water network, activating upon a command from the controller 950. In one example, if the signal from the ambient air temperature (AAT) sensor rises above a threshold value, the controller 950 commands the pump 20 to operate. Likewise, when the signal from the AAT sensor falls below a threshold value, the controller 950 commands the pump 20 to cease operation. The refrigerant may flow continuously through the refrigerant tube 66, or may be bypassed (not shown) around the second heat exchanger 18,118 when the pump 20 is inoperative.

In one example, the fan 16 is inoperable due to constraints within the cargo ship transporting the refrigerant vapor compression system 10. The refrigerant vapor enters the first heat exchanger 14 and exits through conduit 15. The value of the ambient air temperature (AAT) is approximately 50°C. The temperature of the refrigerant vapor exiting the first heat exchanger 14 is approximately 55°C, which is not sufficiently cooled. Consequently, either a crew member opens the valve to the coolant inlet conduit 56 or the controller 950 activates the pump 20 responsive to a temperature sensor value. The pump 20 pumps the liquid coolant 21 through the coolant inlet conduit 56,156, while the coolant flows freely within the first interior volume 64, thereby effecting a heat exchange with the vaporous refrigerant flowing in the refrigerant tube 66. The liquid coolant 21 enters the first coolant port 150 at a temperature of 30°C and a flow rate of 0.25 kg/sec. The CO₂ in the refrigerant tube 166 enters the first refrigerant tube opening 146 at a temperature of 120°C, a pressure of 12,400 kPa, and a flow rate of 0.13 kg/sec. The CO₂ exits the second refrigerant tube opening 148 at a temperature of 35°C and a pressure of 12,000 kPa, and the liquid coolant 21 temperature rises to approximately 60°C (or rises approximately 30°C).

The particular arrangement of the refrigerant tube 166 within the enclosure 144 allows for design possibilities not available when the liquid-cooled heat exchanger is a pressure vessel. The inventor of the present disclosure has recognized that certain advantages in manufacturing cost and operational efficiencies may be realized by an alternate construction. For example, the sea water flowing through the enclosure 144 does not need to be pressurized any more than the pump head required for proper flow rate, approximately 10 pounds per square inch (70 kPa). Also, the usual concerns with exposure to high temperatures are alleviated since the enclosure 144 is flooded in liquid coolant 21. As such, the enclosure 144 is not treated as a pressure vessel and may be constructed of lightweight materials. In one example, the enclosure 144 is constructed of rigid plastic or polycarbonate. Plastics and the like are non-corrosive, very inexpensive, and may be easily molded to fit the particular needs of the design.

Another advantage of the present disclosure is that the parasitic power required to operate pump 20 is less than other pumps in the prior art. This is because the pump is not required to operate at high pressure: there is very little pressure drop on the liquid coolant, as compared to flowing the coolant through long lengths of small tubing.

While the present disclosure has been particularly shown and described with reference to the preferred mode as illustrated in the drawing, it will be understood by one skilled in the art that various changes in detail may be effected therein without departing from the scope of the invention as defined by the claims.

## Claims

1. A liquid-cooled heat exchanger (18;118;128) for use in a refrigerant vapor compression system (10), the liquid-cooled heat exchanger comprising:
an enclosure (44;144;244) comprising a first interior surface (62; 162) defining a first interior volume (64; 164;264), the enclosure further comprising a plurality of openings being fluidly coupled to the first interior volume, the plurality of openings comprising a first refrigerant tube opening (46;146), a second refrigerant tube opening (48;148), a first coolant port (50;150) adapted to flow a liquid coolant into the enclosure, and a second coolant port (52;152) adapted to flow the coolant out of the enclosure;
a first fitting (54;154) sealingly engaged to the first coolant port, the fitting adapted tao couple with a coolant inlet conduit;
a second fitting (56;156) sealingly engaged to the second coolant port, the fitting adapted to couple with a coolant discharge conduit; and
a continuous refrigerant tube (66; 166;266) having a first end (68;168), a second end (72;172), and a first length disposed therebetween, the first end passing through and in sealing engagement with the first refrigerant tube opening, the second end passing through and in sealing engagement with the second refrigerant tube opening, the first length disposed in serpentine fashion within the first interior volume,
**characterised by** a baffle (176) disposed within the enclosure, the baffle defining a second interior volume (178) within the first interior volume, the baffle having at least one aperture (180) fluidly coupling the second interior volume to a remaining portion of the first interior volume,
wherein the continuous refrigerant tube further comprises a second length disposed within the second interior volume.

2. The heat exchanger of claim 1, wherein the first length and the second length are helical.

3. The heat exchanger of claim 2, wherein the first length of the refrigerant tube is spiraled helically in a direction opposite to the second length.

4. The heat exchanger of any preceding claim further comprising a flow turbulator (184) disposed within the first interior volume for creating turbulent flow to increase a heat transfer characteristic between the liquid coolant and the refrigerant tube.

5. The heat exchanger of any preceding claim wherein the continuous refrigerant tube branches and converges.

6. A refrigerant vapor compression system (10) comprising:
a compressor (12) for compressing a refrigerant, the compressor having a suction port (33) and a discharge port;
an air-cooled heat exchanger (14) operatively coupled to the discharge port;
a fan disposed (16) proximate to the air-cooled condenser heat exchanger unit;
the heat exchanger of any preceding claim operatively coupled to the air-cooled heat exchanger, wherein the first coolant port is a liquid coolant inlet port, wherein the second coolant port is a liquid coolant discharge port, and wherein the refrigerant tube is fluidly isolated from and in heat exchange relationship with the interior volume;
a liquid coolant inlet conduit (56) operatively coupled to the liquid coolant inlet port of the liquid-cooled heat exchanger;
a coolant pump (20) operatively coupled to the liquid coolant inlet conduit for pumping the liquid coolant;
a liquid coolant discharge conduit (60) operatively coupled to the liquid coolant discharge port of the liquid-cooled heat exchanger;
an evaporator heat exchanger unit (28) operatively coupled to the liquid-cooled heat exchanger and the suction port;
an evaporator fan (32) disposed proximate to the evaporator heat exchanger unit; and
a controller (950) operatively associated with the coolant pump for controlling the flow of liquid coolant into the liquid-cooled heat exchanger.

7. The refrigerant vapor compression system of claim 6 wherein the refrigerant is carbon dioxide.

8. The refrigerant vapor compression system of claim 6 or 7, wherein the liquid coolant is water.

9. The refrigerant vapor compression system of claim 8, wherein the refrigerant vapor compression system is located on a cargo ship, and the liquid coolant is grey water.

10. The refrigerant vapor compression system of claim 9, wherein the controller is manual, and the flow of liquid coolant into the liquid-cooled heat exchanger is controlled by a hand-operated valve.

11. The refrigerant vapor compression system any of claims 6 to 10, wherein the controller controls the coolant pump responsive to a parameter within the refrigerant vapor compression system.

12. The refrigerant vapor compression system any of claim 11, wherein the parameter is ambient air temperature.

13. A method for liquid-cooling of a vapor refrigerant in a refrigerant vapor compression system (10), the method comprising the steps of:
providing an air-cooled heat exchanger (14);
providing a liquid-cooled heat exchanger (18) coupled to the air-cooled heat exchanger, the liquid-cooled heat exchanger comprising an enclosure (44;144;244) having a first interior volume (64;164;264);
providing in serpentine fashion a continuous refrigerant tube (66;166;266) extending through the first volume of the liquid-cooled heat exchanger;
flowing a refrigerant through the air-cooled heat exchanger and, if the refrigerant is not sufficiently cooled,
simultaneously flowing the refrigerant through the continuous refrigerant tube in the liquid-cooled heat exchanger and flowing a liquid coolant (21) through the first interior volume of the liquid-cooled heat exchanger,
**characterised by** the step of providing a baffle (176) within the first interior volume, the baffle defining a second interior volume (178) within the first interior volume, the baffle comprising an aperture (180), the continuous refrigerant tube extending through the first volume of the liquid-cooled heat exchanger, through the aperture, and through the second interior volume of the liquid-cooled heat exchanger.

14. The method of claim 13, wherein the refrigerant is passed helically through the first interior volume and the second interior volume, preferably wherein a direction of the helical path through the first interior volume and the second interior volume is opposite to a direction of the liquid coolant flow.

15. The method of claim 13 or 14, further comprising the step of providing a controller (950), the controller controlling the refrigerant flow through the liquid-cooled heat exchanger responsive to a parameter on the air-cooled heat exchanger; preferably wherein the parameter is ambient air temperature.

## Patentansprüche

1. Flüssigkeitsgekühlter Wärmetauscher (18; 118; 128) zur Verwendung in einem Kältemitteldampfkompressionssystem (10), wobei der flüssigkeitsgekühlte Wärmetauscher Folgendes umfasst:
ein Gehäuse (44; 144; 244), das eine erste Innenfläche (62; 162) umfasst, die ein erstes Innenvolumen (64; 164; 264) begrenzt, wobei das Gehäuse ferner mehrere Öffnungen umfasst, die mit dem ersten Innenvolumen fluidgekoppelt sind, wobei die mehreren Öffnungen eine erste Kältemittelschlauchöffnung (46; 146), eine zweite Kältemittelschlauchöffnung (48; 148), einen ersten Kühlmittelstutzen (50; 150), der zum Fließenlassen eines flüssigen Kühlmittels in das Gehäuse ausgebildet ist, und einen zweiten Kühlmittelstutzen (52; 152) umfasst, der zum Fließenlassen des flüssigen Kühlmittels aus dem Gehäuse heraus ausgebildet ist;
ein erstes Anschlussstück (54; 154), das dichtend mit dem ersten Kühlmittelstutzen in Eingriff steht, wobei das Anschlussstück dazu ausgebildet ist, an eine Kühlmitteleinlassleitung zu koppeln;
ein zweites Anschlussstück (56; 156), das dichtend mit dem zweiten Kühlmittelstutzen in Eingriff steht, wobei das Anschlussstück dazu ausgebildet ist, an eine Kühlmittelauslassleitung zu koppeln; und
einen kontinuierlichen Kältemittelschlauch (66; 166; 266) mit einem ersten Ende (68; 168), einem zweiten Ende (72; 172) und einer ersten dazwischen angeordneten Erstreckung, wobei das erste Ende durch die erste Kältemittelschlauchöffnung verläuft und in dichtendem Eingriff mit dieser steht, das zweite Ende durch die zweite Kältemittelschlauchöffnung verläuft und in dichtendem Eingriff mit dieser steht und die erste Erstreckung in gewundener Weise im ersten Innenvolumen angeordnet ist,
**gekennzeichnet durch** eine Trennwand (176), die in dem Gehäuse angeordnet ist, wobei die Trennwand ein zweites Innenvolumen (178) innerhalb des ersten Innenvolumens begrenzt, wobei die Trennwand wenigstens eine Öffnung (180) aufweist, die eine Fluidkopplung des zweiten Innenvolumens zu einem verbleibenden Teil des ersten Innenvolumens herstellt,
wobei der kontinuierliche Kältemittelschlauch ferner eine zweite Erstreckung umfasst, die innerhalb des zweiten Innenvolumens angeordnet ist.

2. Wärmetauscher nach Anspruch 1, wobei die erste Erstreckung und die zweite Erstreckung spiralförmig sind.

3. Wärmetauscher nach Anspruch 2, wobei sich die erste Erstreckung des Kältemittelschlauchs spiralförmig in eine Richtung entgegengesetzt zur zweiten Erstreckung erstreckt.

4. Wärmetauscher nach einem der vorangehenden Ansprüche, ferner umfassend einen Strömungsturbulator (184), der innerhalb des ersten Innenvolumens angeordnet ist, um eine Turbulenzströmung zu erzeugen, um eine Wärmeübertragungseigenschaft zwischen dem flüssigen Kühlmittel und dem Kältemittelschlauch zu erhöhen.

5. Wärmetauscher nach einem der vorangehenden Ansprüche, wobei sich der kontinuierliche Kältemittelschlauch verzweigt und vereint.

6. Kältemitteldampfkompressionssystem (10), umfassend:
einen Kompressor (12) zum Verdichten eines Kältemittels, wobei der Kompressor einen Ansaugstutzen (33) und einen Auslaufstutzen aufweist;
einen luftgekühlten Wärmetauscher (14), der wirksam an den Auslaufstutzen gekoppelt ist;
ein Gebläse (16), das benachbart zu der luftgekühlten Wärmetauschereinheit angeordnet ist;
den Wärmetauscher nach einem der vorangehenden Ansprüche, der wirksam an den luftgekühlten Wärmetauscher gekoppelt ist, wobei der erste Kühlmittelstutzen ein Einlassstutzen für flüssiges Kühlmittel ist, wobei der zweite Kühlmittelstutzen ein Auslaufstutzen für flüssiges Kühlmittel ist und wobei der Kältemittelschlauch vom Innenvolumen fluidisoliert ist und mit diesem in Wärmetauschbeziehung steht;
eine Einlassleitung (56) für flüssiges Kühlmittel, die wirksam an den Einlassstutzen für flüssiges Kühlmittel des flüssigkeitsgekühlten Wärmetauschers gekoppelt ist;
eine Kühlmittelpumpe (20), die wirksam an die Einlassleitung für flüssiges Kühlmittel gekoppelt ist, um das flüssige Kühlmittel zu pumpen;
eine Auslaufleitung (60) für flüssiges Kühlmittel, die wirksam an den Auslaufstutzen für flüssiges Kühlmittel des flüssigkeitsgekühlten Wärmetauschers gekoppelt ist;
eine Verdampferwärmetauschereinheit (28), die wirksam an den flüssigkeitsgekühlten Wärmetauscher und den Ansaugstutzen gekoppelt ist;
ein Verdampfergebläse (32), das benachbart zu der Verdampferwärmetauschereinheit angeordnet ist; und
eine Steuereinrichtung (950), die der Kühlmittelpumpe wirksam zugeordnet ist, um das Strömen von flüssigem Kühlmittel in den flüssigkeitsgekühlten Wärmetauscher zu steuern.

7. Kältemitteldampfkompressionssystem nach Anspruch 6, wobei das Kältemittel Kohlendioxid ist.

8. Kältemitteldampfkompressionssystem nach Anspruch 6 oder 7, wobei das flüssige Kühlmittel Wasser ist.

9. Kältemitteldampfkompressionssystem nach Anspruch 8, wobei das Kältemitteldampfkompressionssystem auf einem Frachtschiff angeordnet ist und das flüssige Kühlmittel Grauwasser ist.

10. Kältemitteldampfkompressionssystem nach Anspruch 9, wobei die Steuereinrichtung manuell ist und das Strömen des flüssigen Kühlmittels in den flüssigkeitsgekühlten Wärmetauscher von einem mit der Hand betätigten Ventil gesteuert wird.

11. Kältemitteldampfkompressionssystem nach einem der Ansprüche 6 bis 10, wobei die Steuereinrichtung die Kühlmittelpumpe in Reaktion auf einen Parameter innerhalb des Kältemitteldampfkompressionssystems steuert.

12. Kältemitteldampfkompressionssystem nach Anspruch 11, wobei der Parameter die Umgebungslufttemperatur ist.

13. Verfahren zum Flüssigkeitskühlen eines Dampfkältemittels in einem Kältemitteldampfkompressionssystem (10), wobei das Verfahren folgende Schritte umfasst:
Bereitstellen eines luftgekühlten Wärmetauschers (14);
Bereitstellen eines flüssigkeitsgekühlten Wärmetauschers (18), der an den luftgekühlten Wärmetauscher gekoppelt ist, wobei der flüssigkeitsgekühlte Wärmetauscher ein Gehäuse (44; 144; 244) mit einem ersten Innenvolumen (64; 164; 264) umfasst;
Bereitstellen in gewundener Weise eines kontinuierlichen Kältemittelschlauchs (66; 166; 266), der sich durch das erste Volumen des flüssigkeitsgekühlten Wärmetauschers erstreckt;
Strömenlassen eines Kältemittels durch den luftgekühlten Wärmetauscher und, wenn das Kältemittel nicht ausreichend gekühlt wird,
gleichzeitiges Strömenlassen des Kältemittels durch den kontinuierlichen Kältemittelschlauch im flüssigkeitsgekühlten Wärmetauscher und Strömenlassen eines flüssigen Kühlmittels (21) durch das erste Innenvolumen des flüssigkeitsgekühlten Wärmetauschers,
**gekennzeichnet durch** folgenden Schritt: Bereitstellen einer Trennwand (176) innerhalb des ersten Innenvolumens, wobei die Trennwand ein zweites Innenvolumen (178) innerhalb des ersten Innenvolumens begrenzt, wobei die Trennwand wenigstens eine Öffnung (180) umfasst, wobei sich der kontinuierliche Kältemittelschlauch **durch** das erste Volumen des flüssigkeitsgekühlten Wärmetauschers, **durch** die Öffnung und **durch** das zweite Innenvolumen des flüssigkeitsgekühlten Wärmetauschers erstreckt.

14. Verfahren nach Anspruch 13, wobei das Kältemittel spiralförmig durch das erste Innenvolumen und das zweite Innenvolumen geleitet wird, wobei eine Richtung des spiralförmigen Wegs durch das erste Innenvolumen und das zweite Innenvolumen vorzugsweise einer Strömungsrichtung des flüssigen Kühlmittels entgegengesetzt ist.

15. Verfahren nach Anspruch 13 oder 14, ferner folgenden Schritt umfassend: Bereitstellen einer Steuereinrichtung (950), wobei die Steuereinrichtung das Strömen des Kältemittels durch den flüssigkeitsgekühlten Wärmetauscher in Reaktion auf einen Parameter am luftgekühlten Wärmetauscher steuert; wobei der Parameter vorzugsweise die Umgebungslufttemperatur ist.

## Revendications

1. Échangeur de chaleur refroidi par liquide (18 ; 118 ; 128) pour utiliser dans un système de compression à vapeur réfrigérant (10), l'échangeur de chaleur refroidi par liquide comprenant :
une enceinte (44 ; 144 ; 244) comprenant une première surface intérieure (62 ; 162) définissant un premier volume intérieur (64 ; 164 ; 264), l'enceinte comprenant en outre une pluralité d'ouvertures couplée par voie fluidique au premier volume intérieur, la pluralité d'ouvertures comprenant une première ouverture de tube réfrigérant (46 ; 146), une deuxième ouverture de tube réfrigérant (48 ; 148), un premier orifice de refroidissement (50 ; 150) adapté pour faire circuler un réfrigérant liquide dans l'enceinte et un deuxième orifice de refroidissement (52 ; 152) adapté pour faire circuler le liquide de refroidissement hors de enceinte ;
un premier raccord (54 ; 154) emboîté hermétiquement au premier orifice de refroidissement, le raccord est adapté pour le couplage à une conduite d'entrée de refroidissement ;
un deuxième raccord (56 ; 156) emboîté hermétiquement au deuxième orifice de refroidissement ; le raccord est adapté pour le couplage à une conduite de vidange du liquide de refroidissement ; et
un tube réfrigérant continu (66 ; 166 ; 266) ayant une première extrémité (68 ; 168), une deuxième extrémité (72 ; 172) et une première longueur disposée entre celles-ci, la première extrémité emboîtée hermétiquement avec la première ouverture du tube réfrigérant et passant à travers celle-ci, la deuxième extrémité emboîtée hermétiquement avec la deuxième ouverture du tube réfrigérant, et passant à travers celle-ci, la première longueur est disposée en serpentine au sein du premier volume intérieur,
**caractérisé par** un tampon (176) disposé dans l'enceinte, le tampon définissant un deuxième volume intérieur (178) dans le premier volume intérieur, le tampon ayant au moins une ouverture (180) couplée de manière fluidique au deuxième volume intérieur à une portion restante du premier volume intérieur,
dans lequel le tube réfrigérant continu comprend en outre une deuxième longueur disposée dans le deuxième volume intérieur.

2. Échangeur de chaleur de la revendication 1, dans lequel la première longueur et la deuxième longueur sont hélicoïdales.

3. Échangeur de chaleur de la revendication 2, dans lequel la première longueur du tube réfrigérant est en spirale hélicoïdale dans une direction opposée à la deuxième longueur.

4. Échangeur de chaleur d'une quelconque revendication précédente comprenant en outre un turbulateur de flux (184) disposé dans le premier volume intérieur pour créer une circulation turbulente pour augmenter un transfert de chaleur caractéristique entre le réfrigérant liquide et le tube réfrigérant.

5. Échangeur de chaleur d'une quelconque revendication précédente, dans lequel le tube réfrigérant continu bifurque et converge.

6. Système de compression à vapeur réfrigérant (10) comprenant :
un compresseur (12) pour comprimer un réfrigérant ; le compresseur ayant un orifice d'aspiration (33) et un orifice de vidange ;
un échangeur de chaleur refroidi par air (14) couplé opérationnellement à l'orifice de vidange ;
un ventilateur (16) situé à proximité de l'unité d'échangeur de chaleur du condensateur refroidi par air ;
l'échangeur de chaleur d'une quelconque revendication précédente couplé opérationnellement à l'échangeur de chaleur refroidi par air, dans lequel le premier orifice de refroidissement est un orifice d'entrée du réfrigérant liquide, dans lequel le deuxième orifice de refroidissement est un orifice de vidange du réfrigérant liquide et dans lequel le tube réfrigérant est isolé de manière fluidique depuis et en relation d'échange de chaleur avec le volume intérieur ;
une conduite d'entrée du réfrigérant liquide (56) couplée opérationnellement à l'orifice d'entrée du réfrigérant liquide de l'échangeur de chaleur refroidi par liquide ;
une pompe de refroidissement (20) couplée opérationnellement à la conduite d'entrée du réfrigérant liquide pour pomper un réfrigérant liquide ;
une conduite de vidange du réfrigérant liquide (60) couplée opérationnellement à l'orifice de vidange du réfrigérant liquide de l'échangeur de chaleur refroidi par liquide ;
une unité d'échangeur de chaleur à évaporateur (28) couplé opérationnellement à l'échangeur de chaleur refroidi par liquide et à l'orifice d'aspiration ;
un ventilateur à évaporateur (32) disposé à proximité de l'unité d'échangeur de chaleur à évaporateur ; et
un contrôleur (950) associé opérationnellement à la pompe de refroidissement pour contrôler le débit du réfrigérant liquide dans l'échangeur de chaleur refroidi par liquide.

7. Système de compression à vapeur réfrigérant de la revendication 6, dans lequel le réfrigérant employé est le dioxyde de carbone.

8. Système de compression à vapeur réfrigérant de la revendication 6 ou 7, dans lequel le réfrigérant liquide employé est de l'eau.

9. Système de compression à vapeur réfrigérant de la revendication 8, dans lequel le système de compression à vapeur réfrigérant est situé sur un navire de charge et le réfrigérant liquide est de l'eau grise.

10. Système de compression à vapeur réfrigérant de la revendication 9, dans lequel le contrôleur est manuel et le débit de réfrigérant liquide dans l'échangeur de chaleur refroidi par liquide est contrôlé par une soupape à commande manuelle.

11. Système de compression à vapeur réfrigérant d'une quelconque des revendications 6 à 10, dans lequel le contrôleur contrôle la pompe de refroidissement en réponse à un paramètre dans le système de compression à vapeur réfrigérant.

12. Système de compression à vapeur réfrigérant de la revendication 11, dans lequel le paramètre est la température de l'air ambiant.

13. Procédé pour refroidir par liquide un réfrigérant à vapeur dans un système de compression à vapeur réfrigérant (10), la méthode comprenant les étapes de :
fournir un échangeur de chaleur refroidi par air (14) ;
fournir un échangeur de chaleur refroidi par liquide (18) couplé à l'échangeur de chaleur refroidi par air, l'échangeur de chaleur refroidi par liquide comprenant une enceinte (44 ; 144 ; 244) ayant un premier volume intérieur (64 ; 164 ; 264) ;
fournir un tube réfrigérant continu sous la forme d'une serpentine (66 ; 166 ; 266) s'étendant à travers le premier volume de l'échangeur de chaleur refroidi par liquide ;
faire circuler un réfrigérant à travers l'échangeur de chaleur refroidi par air et, si le réfrigérant n'est pas suffisamment refroidi,
faire circuler simultanément le réfrigérant à travers le tube réfrigérant continu dans l'échangeur de chaleur refroidi par liquide et faire circuler un réfrigérant liquide (21) à travers le premier volume intérieur de l'échangeur de chaleur refroidi par liquide,
**caractérisé par** l'étape de fourniture d'un tampon (176) dans le premier volume intérieur, le tampon définissant un deuxième volume intérieur (178) dans le premier volume intérieur, le tampon comprenant une ouverture (180), le tube réfrigérant continu s'étendant à travers le premier volume de l'échangeur de chaleur refroidi par liquide, à travers l'ouverture et à travers le deuxième volume intérieur de l'échangeur de chaleur refroidi par liquide.

14. Procédé de la revendication 13, dans lequel le réfrigérant est transféré de manière hélicoïdale à travers le premier volume intérieur et le deuxième volume intérieur, de préférence dans lequel une direction du parcours hélicoïdal à travers le premier volume intérieur et le deuxième volume intérieur est opposée à une direction du débit du réfrigérant liquide.

15. Procédé des revendications 13 ou 14, comprenant en outre l'étape consistant de fourniture d'un contrôleur (950), le contrôleur contrôlant la circulation du réfrigérant à travers l'échangeur de chaleur refroidi par liquide en réponse à un paramètre sur l'échangeur de chaleur refroidi par air ; de préférence dans lequel le paramètre est la température de l'air ambiant.
